# EUROPEAN PATENT APPLICATION

(11) **EP 3 643 920 A1**
(43) Date of publication of application: **29.04.2020**
(21) Application number: 19196482.4
(22) Date of filing: 10.09.2019
(51) Int. Cl.: F04C 18/02

(54) **MOTOR OPERATED COMPRESSOR**

(30) Priority: 27.09.2018 KR 20180115216
(71) Applicant: LG ELECTRONICS INC., Yeongdeungpo-Gu Seoul 07336 (KR)
(72) Inventor: SEONG, Sanghun, 08592 Seoul (KR); PARK, Junghoon, 08592 Seoul (KR); PARK, Kyoungjun, 08592 Seoul (KR); LEE, Byeongchul, 08592 Seoul (KR)
(74) Representative: Vossius & Partner Patentanwälte Rechtsanwälte mbB

(57) **Abstract**

A motor operated compressor according to the present disclosure may include a main housing having a motor chamber; a frame provided on one side of the motor chamber and coupled to the main housing; a fixed scroll coupled to one side surface of the frame; an orbiting scroll provided to perform an orbiting movement between the frame and the fixed scroll, and form a compression chamber along with the fixed scroll; a sealing member provided on one side surface of the orbiting scroll to form a back pressure chamber between the orbiting scroll and the frame; and a plate provided between the frame and the fixed scroll and between the frame and the orbiting scroll, wherein the plate includes a sealing portion at least part of which is positioned between the frame and the fixed scroll; and a sliding portion extended from the sealing portion as a single body and positioned between the frame and the orbiting scroll. Through this, it may be possible to reduce the number of assembly processes for the compressor.

## Description

The present disclosure relates to a compressor, and more particularly, to a scroll type motor operated compressor.

In general, compressors for performing the role of compressing refrigerant in automotive air-conditioning systems have been developed in various forms, and in recent years, the development of motor operated compressors electrically driven using a motor have been actively carried out according to the electricization trend of auto parts.

A motor operated compressor mainly employs a scroll compression method suitable for a high compression ratio operation. Such a scroll-type motor operated compressor (hereinafter, abbreviated as a motor operated compressor) is disclosed in a patent literature (United States Patent Application Publication US 2011/0243777 A1).

A motor operated compressor in the related art disclosed in this patent literature, major parts are formed of aluminum material in order to reduce weight. However, aluminum material is lighter than cast iron, but is relatively soft, and thus has a disadvantage that is weak against wear. As a result, a frictional portion is provided with a plate made of a steel plate to reduce wear.

In particular, a plate is provided between a frame and an orbiting scroll that form a back pressure chamber, and the plate is provided to have an elastic force so as to support an orbiting scroll toward a fixed scroll using the elastic force of the plate in addition to a back pressure of the back pressure chamber. This suppresses a space between the orbiting scroll and the fixed scroll from being separated to increase compression efficiency.

However, in the motor operated compressor in the related art as described above, a sealing member must be provided to seal an inside of the casing, but the sealing member must be provided separately from the foregoing plate. Therefore, a motor operated compressor disclosed in the patent literature has a problem that the number of parts increases as the plate and the sealing member are provided independently, thereby making the assembly complicated.

Furthermore, in the motor operated compressor in the related art, when a casing is fastened, the frame and the fixed scroll may be indirectly fixed by an inner circumferential surface of the casing. However, it may require a high degree of processing for the casing, the frame, and the fixed scroll to increase manufacturing cost as well as not to efficiently perform sealing due to machining errors or assembly errors.

In addition, the motor operated compressor in the related art, as the frame and the fixed scroll are provided in the casing, an outer diameter of the fixed scroll compared to the same outer diameter of the compressor may be restricted, and there is a limit in increasing compression capacity.

An aspect of the present disclosure is to provide a motor operated compressor capable of removing a sealing member so as to reduce the number of assembly processes for assembling the sealing member.

Moreover, the present disclosure is to provide a motor operated compressor capable of forming a sealing member for sealing a plate and an inside of a casing that prevent wear between the orbiting scroll and the frame.

Moreover, the present disclosure is to provide a motor operated compressor capable of effectively preventing wear between the orbiting scroll and the frame and effectively sealing an inside of the casing while forming the plate and the sealing member as a single body.

In addition, another aspect of the present disclosure is to provide a motor operated compressor capable of easily fastening the frame and the fixed scroll including the casing so as to reduce the number of assembly processes.

Moreover, the present disclosure is to provide a motor operated compressor capable of preventing a sealing force between parts from being lowered due to machining errors or assembly errors when assembling the frame and the fixed scroll including the casing.

In order to accomplish the objectives of the present disclosure, there is provided a motor operated compressor, including a main housing having a motor chamber, a frame covering one side of the motor chamber, a fixed scroll fixed to the frame, an orbiting scroll configured to form a compression chamber along with the fixed scroll, and a rear housing constituting a discharge chamber for receiving refrigerant discharged from the compression chamber, wherein a portion sealing an inside of the motor operated compressor and a portion lubricating between the frame and the orbiting scroll are integrally formed.

Here, a portion sealing the motor operated compressor may be located between the frame and the fixed scroll.

Furthermore, the portion sealing the motor operated compressor may include a first portion located between the frame and the fixed scroll, and a second portion located between the main housing and the rear housing, and the first portion and the second portion may be integrally formed.

In addition, in order to achieve the objectives of the present disclosure, there is provided a motor operated compressor, including a main housing having a motor chamber; a frame provided on one side of the motor chamber and coupled to the main housing; a fixed scroll coupled to one side surface of the frame; an orbiting scroll provided to perform an orbiting movement between the frame and the fixed scroll, and form a compression chamber along with the fixed scroll; and a plate provided between the frame and the fixed scroll and between the frame and the orbiting scroll, wherein the plate includes a sealing portion at least part of which is positioned between the frame and the fixed scroll; and a sliding portion extended from the sealing portion as a single body and positioned between the frame and the orbiting scroll.

Here, a sealing member that forms a back pressure chamber between the orbiting scroll and the frame may be further provided on one side surface of the orbiting scroll facing the frame, and the sealing portion of the plate may be provided on an outer side than a portion in contact with the sealing member, and the sliding portion of the plate may be provided at a portion in contact with the sealing member.

Here, the frame may be coupled to the main housing at an outside of the main housing, and the fixed scroll may be coupled to the frame at an outside of the main housing, and a rear housing forming a discharge chamber may be coupled to the fixed scroll to accommodate refrigerant discharged from the compression chamber, and the fixed scroll may be coupled to an outside of the rear housing.

Furthermore, a through hole may be formed in the sealing portion to allow a bolt for fastening the main housing, the frame, the fixed scroll, and the rear housing to pass therethrough.

Here, the frame may be inserted into and coupled to an inner circumferential surface of the main housing, and a rear housing into which the fixed scroll is inserted may be coupled to one end of the main housing, and the sealing portion may be provided between the main housing and the rear housing.

Furthermore, a through hole may be formed in the sealing portion to allow a bolt for fastening the main housing and the rear housing to pass therethrough.

Here, a reference hole may be formed in the sealing portion to insert a reference pin coupled to the frame or the fixed scroll.

Here, the frame may be provided with a first portion facing one side surface of the fixed scroll and a second portion provided on an inner side of the first portion to face one side surface of the orbiting scroll, and the first portion and the second portion may be formed at the same height in an axial direction.

Furthermore, the second portion may be provided with a rotation prevention member for preventing the rotation of the orbiting scroll, and the sealing member may be provided on an outer side than the rotation prevention member in a radial direction.

Here, the plate may be made of a material having a higher rigidity than the frame and the orbiting scroll.

Furthermore, the sealing portion and the sliding portion may be formed to have the same height in an axial direction.

Furthermore, the sealing portion and the sliding portion may be formed to have the same thickness.

Furthermore, at least one sealing protrusion protruded in a direction toward the frame or the fixed scroll to be pressed in close contact with the frame and the fixed scroll may be formed in the sealing portion, and the sealing protrusion may be formed in an annular shape.

Furthermore, a coating surface made of a material having elasticity may be further formed on a surface of the sealing portion.

In addition, in order to achieve the objectives of the present disclosure, there is provided a motor operated compressor, including a main housing having a motor chamber; a stator fixed to the motor chamber; a rotor rotatably provided on an inner side of the stator; a rotation shaft coupled to the rotor; a frame supporting the rotation shaft, and coupled to the main housing; an orbiting scroll coupled to the rotation shaft to perform an orbiting movement; a fixed scroll coupled to the orbiting scroll to form a compression chamber along with the orbiting scroll; a rear housing coupled to the fixed scroll, and formed with a discharge chamber accommodating refrigerant discharged from the compression chamber; a plate having a higher rigidity than the orbiting scroll and the frame, and provided between the orbiting scroll and the frame; and a sealing member formed in an annular shape and provided in the orbiting scroll, and slidably provided on the plate to seal a back pressure chamber between the frame and the orbiting scroll, wherein a space portion axially recessed to form a back pressure chamber along with the orbiting scroll is formed at a central portion of the frame, and a support surface portion for supporting the plate in an axial direction is formed on an outer side of the space portion, and the support surface portion is formed to have the same height in an axial direction.

Here, the plate may include a sealing portion for sealing the back pressure chamber and a sliding portion in which the sealing member is slidably provided, and the sealing portion and the sliding portion may be formed in a single body.

The motor operated compressor according to the present disclosure may be provided with a gasket plate having a sealing portion provided between the frame and the fixed scroll and a sliding portion provided between the frame and the orbiting scroll as a single body, thereby reducing the number of parts constituting the compressor and reducing the number of assembly processes therethrough to reduce manufacturing cost.

In addition, the sealing portion may be provided with a sealing protrusion or an elastic coating layer to increase the sealing effect, and at the same time, the sliding portion may enhance roughness, thereby preventing wear of the orbiting scroll or the sealing member provided in the orbiting scroll.

Moreover, as a sealing effect between the gasket plate and the sealing member is improved, a pressure in the back pressure chamber may be uniformly maintained to stably support the orbiting scroll.

In addition, the motor operated compressor according to the present disclosure may reduce the number of assembly processes as the main housing, the frame, the fixed scroll, and the rear housing are collectively fastened together.

Moreover, as the gasket plate is provided between the frame and the fixed scroll and fastened together, thereby simplifying the assembly structure of the gasket plate as well as enhancing a sealing force between each member.

Moreover, as the gasket plate is provided between the frame and the fixed scroll or between the main housing and the rear housing and fastened together, thereby firmly the gasket plate, thereby securely coupling the gasket plate as well as reducing the number of assembly processes for the gasket plate.

### BRIEF DESCRIPTION OF THE DRAWING

The accompanying drawings, which are included to provide a further understanding of the invention and are incorporated in and constitute a part of this specification, illustrate embodiments of the invention and together with the description serve to explain the principles of the invention. In the drawings:
FIG. 1 is an exploded perspective view showing a motor operated compressor according to the present disclosure.
FIG. 2 is a cross-sectional view showing a motor operated compressor assembled according to FIG. 1.
FIG. 3 is an exploded perspective view showing a compression unit according to the present embodiment.
FIG. 4 is an enlarged cross-sectional view showing a configuration in which a gasket plate provided between a frame, an orbiting scroll, and a fixed scroll is assembled in the compression unit according to the present embodiment.
FIG. 5 is a perspective view showing an embodiment of the gasket plate according to the present embodiment.
FIG. 6 is a plan view showing the gasket plate according to FIG. 5.
FIG. 7 is a cross-sectional view taken along line "V-V" in the gasket plate according to FIG. 6.
FIG. 8 is a cross-sectional view showing a configuration in which the gasket plate according to FIG. 5 is coupled between the frame and the fixed scroll.
FIG. 9A is a plan view showing an example in which a sealing protrusion is provided in the gasket plate according to the present embodiment.
FIG. 9B is a cross-sectional view taken along line "VI-VI" in FIG. 9A.
FIG. 10A is a plan view showing an example in which a coating surface is provided in the gasket plate according to the present embodiment.
FIG. 10B is a cross-sectional view taken along line "VII-VII" in FIG. 10A.
FIG. 11 is a sectional view illustrating another embodiment of a motor operated compressor according to the present disclosure.

### DETAILED DESCRIPTION OF THE PREFERRED EMBODIMENT

Hereinafter, a scroll compressor according to the present disclosure will be described in detail with reference to an embodiment illustrated in the accompanying drawings.

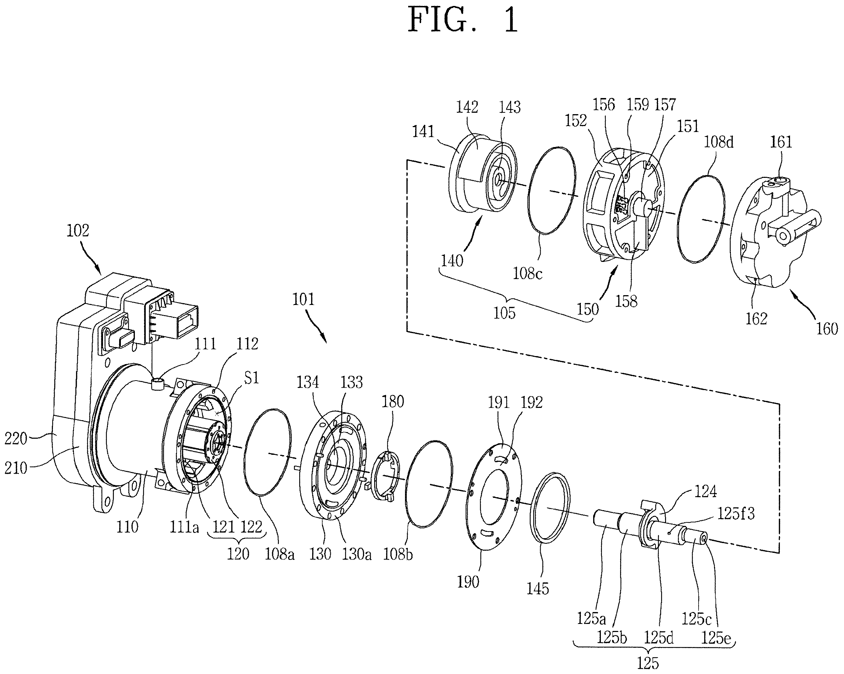

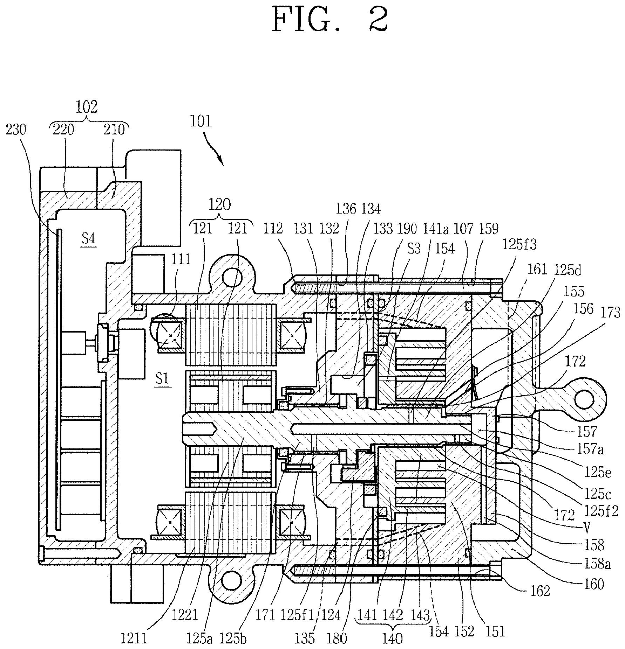

FIG. 1 is an exploded perspective view showing a motor operated compressor according to the present disclosure, and FIG. 2 is a cross-sectional view showing a motor operated compressor assembled according to FIG. 1.

As illustrated in FIGS. 1 and 2, a scroll type motor operated compressor (hereinafter, abbreviated as a motor operated compressor) according to an embodiment of the present invention may include a compressor module 101 for compressing a refrigerant, and an inverter module 102 coupled to a front side of the compressor module 101 for controlling an operation of the compressor module 101. The compressor module 101 and the inverter module 102 may be assembled successively, or independently manufactured and then assembled. The present embodiment illustrates the latter as a representative example, but the former and the latter may alternatively be combined such that the compressor module and the inverter module are independently manufactured but successively assembled.

The compressor module 101 includes a main housing 110 formed with a motor chamber (S1) in an inner space thereof, a drive motor 120 as an electric motor unit fixed to the motor chamber (S1) of the main housing 110, a frame 130 provided at one side of the drive motor 120 and coupled to the main housing 110 to support a rotation shaft 125 and an orbiting scroll 140 which will be described later, a compression unit 105 provided at one side of the drive motor 120 outside the main housing 110 to compress refrigerant using a rotational force of the drive motor 120, and a rear housing 160 coupled to the other side of the drive motor around the compression unit 105 to form a discharge chamber (S2).

As the main housing 110 is disposed in a horizontal direction with respect to the ground, the drive motor 120 and the compression unit 105 are also arranged in the horizontal direction. For the sake of explanation, it will be described that a left side and a right side of FIG. 2 are designated as a front side and a right side, respectively.

The main housing 110 is formed in a cylindrical shape in which both ends thereof are open. However, in some cases, a front end of the main housing 110 may be open, and a rear end thereof may be integrally formed with a frame in a semi-closed shape. According to the present embodiment, it will be described as a cylindrical shape in which both ends of the main housing are open as an example.

Furthermore, in the vicinity of the front end of the main housing 110, an intake port 111 for guiding refrigerant to an inside of the main housing 110 is formed in a penetrating manner. Accordingly, the motor chamber (S1) forms a type of suction space, and thus the motor operated compressor according to the present embodiment forms a low-pressure compressor in which refrigerant is sucked into the compression unit 105 through an inner space of the main housing 110 constituting the motor chamber (S1).

Furthermore, the front end of the main housing 110 is sealed by being coupled to an inverter housing 210 which will be described later, and the rear end of the main housing 110 is almost sealed by being coupled to the frame 130 supporting the compression unit 105.

In addition, a fastening groove 112 for fastening a bolt is formed at the rear end of the main housing 130, and a sealing groove 111a is formed at an inner side of the fastening groove 112. A sealing member 108a, such as an O-ring, may be inserted into the sealing groove 111a to seal a space between the frame 130 and the sealing groove 111a.

On the other hand, the drive motor 120 constituting the electric motor unit is pressed into and coupled to the motor chamber (S1) of the main housing 110. The drive motor 120 includes a stator 121 fixed to an inner circumferential surface of the main housing 110, and a rotor 122 positioned inside the stator 121 and rotated by an interaction with the stator 121. The rotor 122 is coupled with the rotation shaft 125 that transfers a rotation force of the drive motor 120 to the compression unit 105 while rotating together with the rotor 122.

For the stator 121, a stator core 1211 is shrink-fitted (hot press-fitted) and fixed to an inner circumferential surface of the main housing 110, and for the rotor 122, a rotor core 1221 is inserted into an inner circumferential surface of the stator core 1211 with a predetermined gap.

A shaft portion 125a constituting a front end of the rotation shaft 125 is integrally coupled to the rotor 122, and a main bearing portion 125b and a sub bearing portion 125c constituting a rear end of the rotation shaft 125 are inserted into a first bearing 171 provided in the frame 130 and a second bearing 172 of a second bearing 172 provided in the fixed scroll 150, respectively, so as to be rotatably coupled thereto. Accordingly, the rear end of the rotation shaft 125 is rotatably supported in a radial direction at the frame 130 while the front end thereof forms a free end in a coupled state to the rotor 122. Thus, the rotation shaft 125 is supported in a cantilever manner.

In addition, for the rotating shaft 125, an eccentric portion 125d is formed eccentrically with respect to the center of the shaft on the main bearing portion 125b and the sub bearing portion 125c, and the eccentric portion 125d is coupled to a third bearing 173 provided in a rotation shaft coupling portion 143 of the orbiting scroll 140 to transmit a rotational force of the drive motor 120 to the orbiting scroll 140. Accordingly, the orbiting scroll 140 performing an orbiting movement.

In addition, an oil supply groove 125e is formed by a predetermined depth from the rear end of the rotation shaft 125 toward the front side, and a plurality of oil supply holes 125f1, 125f2, 125f3 passing toward an outer circumferential surface of each bearing portion 125a, 125b, 125c are respectively formed in the middle of the oil supply groove 125e. The oil supply groove 125e is accommodated in an oil supply space 157a of the fixed scroll 150 which will be described later and communicated with the discharge chamber (S2) through an oil supply guide hole 158a. Accordingly, the oil supply groove 125e, the oil supply holes 125f1, 125f2, 125f3, the oil supply space 157a, and the oil supply guide hole 158a form a continuous oil supply passage.

The frame 130 is coupled to a rear end of the main housing 110. The frame 130 may be formed in a disk shape and coupled to a rear end of the main housing 110 with bolts. Accordingly, the frame 130 may be formed in the same circular shape as an outer diameter of the main housing 110.

A first shaft accommodating portion 131 is protruded in a direction toward the drive motor 120 at the front center of the frame 130, and a bearing hole 132 is formed through the center of the shaft accommodating portion 131. The bearing hole 132 is coupled to the first bearing 171 supporting the main bearing portion 125b of the rotation shaft 125. In the drawing, the first bearing 171 is illustrated as a bush bearing, but may also be formed with a ball bearing according to circumstances.

In addition, an oldham ring mounting groove 133 on which an oldham ring is mounted is formed at a central portion of the rear surface of the frame 130, and a balance weight receiving groove134 in which a balance weight 124 is rotatably accommodated is formed at a central portion of the oldham ring mounting groove 133. Accordingly, the oldham ring mounting groove 133 and the balance weight receiving groove 134 are continuously formed in a stepped manner at a rear central portion of the frame 130 from the rear side to the front side. The oldham ring mounting groove 133 and the balance weight receiving groove 134 form the back pressure chamber (S3) as described above.

In addition, a suction passage 135 for guiding refrigerant in the motor chamber (S1) to a suction chamber constituting a compression chamber (V) is formed at an edge of the frame 130, and a fastening hole 136 for fastening a bolt is formed outside the suction passage 135. It will be described again later.

On the other hand, the compression unit 105 includes an orbiting scroll 140 supported by the frame 130 in an axial direction to perform an orbiting movement, and a fixed scroll (or a non-orbiting scroll) 150 engaged with the orbiting scroll 140 and fixed to a rear end of the frame 130. A pair of compression chambers (V) is formed between the orbiting scroll 140 and the fixed scroll 150 during the orbiting movement of the orbiting scroll 140.

The orbiting scroll 140 is supported in an axial direction on a rear surface of the frame 130, and an oldham ring 180 as a rotation prevention mechanism for preventing a rotation of the orbiting scroll 140 is provided between the frame 130 and the orbiting scroll 140. The oldham ring 180 is inserted into an oldham ring mounting groove 133 of the frame 130, and a mechanism consisting of pins and rings as well as the oldham ring may be applied to the rotation prevention mechanism.

Furthermore, for the orbiting scroll 140, an orbiting scroll end plate portion (hereinafter, referred to as an orbiting end plate portion) 141 is formed in a substantially disk shape, and an orbiting wrap 142 engaged with a fixed wrap 153, which will be described later, to form the compression chambers (V) on an inner surface and an outer surface, respectively, with respect to the fixed wrap 153, is formed on a front surface of the orbiting end plate portion 141.

The orbiting end plate portion 141 is provided with a back pressure hole 141a for communicating the back pressure chamber (S3) and an intermediate compression chamber (V) with each other. Accordingly, oil or refrigerant flows between the back pressure chamber (S3) and the intermediate compression chamber according to a difference between a pressure of the back pressure chamber (S3) and a pressure of the intermediate compression chamber.

Furthermore, the rotation shaft coupling portion 143 to which the eccentric portion 125d of the rotation shaft 125 is rotatably coupled is formed in a penetrating manner at the center of the orbiting end plate portion 141. The rotation shaft coupling portion 143 is formed in a cylindrical shape, and a third bearing 173 forming a bearing surface together with the eccentric portion 125d of the rotation shaft 125 is inserted into and coupled to the rotation shaft coupling portion 143. The rotation shaft coupling portion (or the third bearing) 143 is formed so as to overlap with the orbiting wrap 142 in a radial direction, and the rotation shaft coupling portion 143 becomes a portion of the orbiting wrap 142 which is located at the innermost position.

Meanwhile, the fixed scroll 150 is coupled to a rear surface of the frame 130 from an outside of the main housing 110 as described above. In this case, a sealing member 108b such as an O-ring or a gasket may be provided between the frame 130 and the fixed scroll 150. However, when a gasket plate 190 is provided between the frame 130 and the orbiting scroll 140 as in the present embodiment, the gasket plate 190 may be extended to form a sealing portion serving as a type of gasket. In this case, a separate sealing member may not be provided, or sealing members such as O-rings may be provided on both sides of the sealing portion. It will be described again later.

For the fixed scroll 150, a fixed scroll end plate portion (hereinafter, referred to as a fixed end plate portion) 151 is formed in a substantially disk shape, and a scroll sidewall portion 152 coupled to a rear side support surface (hereinafter, abbreviated as a support surface) 130a of the frame 130 is formed at a front side edge of the fixed end plate portion 151.

The scroll sidewall portion 152 is formed in an annular shape, and an outer circumferential surface of the scroll sidewall portion 152 forms an outer wall of the fixed scroll 150, and a front surface 152a of the scroll sidewall portion 152 is coupled to the support surface 130a of the frame 130 by interposing a sealing member 108c therebetween. The scroll sidewall portion will be described again together with the sealing member.

The fixed wrap 153 engaged with the orbiting wrap 142 to form the compression chambers (V) is formed on a front surface of the fixed end plate portion 151. The fixed wrap 153 may be formed in an involute shape together with the orbiting wrap 142, but may also be formed in various other shapes.

For example, when the fixed wrap 153 and the orbiting wrap 142 are coupled to each other by the rotation shaft 125 passing through the center of the orbiting scroll 140, a pressure difference may greatly occur between the compression chambers while a final compression chamber is formed at an eccentric position. This is because, in case of a shaft-through scroll compressor, a pressure of one compression chamber becomes much lower than that of the other compression chamber as the final compression chamber is formed eccentrically from the center of the scroll. Therefore, in the shaft-through scroll compressor, it is advantageous to form the orbiting wrap 142 and the fixed wrap 153 in a non-involute shape as shown in the present embodiment.

In addition, the scroll sidewall portion 152 is formed with a scroll side suction hole 154 which communicates with a frame side suction hole 135 of the frame 130 to guides refrigerant to the suction chamber. Only one scroll-side suction hole 154 may be formed when the fixed wrap 153 and the swing wrap 142 are asymmetrical, but a plurality of scroll-side suction holes 154 may be formed when they are symmetrical as in the present embodiment.

Furthermore, a discharge port 155 that communicates a final compression chamber (V) with a discharge chamber (S2) which will be explained later to guide the discharge of refrigerant is formed at a central portion of the fixed end plate portion 151. The discharge port 155 may be formed in a penetrating manner from the compression chamber (V) to the discharge chamber (S3) in an axial direction or inclined direction of the fixed end plate portion 151. Only one discharge port 155 may also be formed to communicate with both a first compression chamber and a second compression chamber, and a first discharge port and a second discharge port may be formed so as to be independently communicated with the first compression chamber and the second compression chamber.

In addition, a discharge valve 156 that opens and closes the discharge port 155 is provided on a rear surface of the fixed end plate portion 151. When the discharge valve has a plurality of discharge ports 155, they may be individually formed or integrally formed.

A second shaft accommodating portion 157 in which the sub bearing portion 125c of the rotation shaft 125 is rotatably inserted to be supported in a radial direction is formed in the center of the fixed end plate portion 151. The second shaft accommodating portion 157 may be formed in the fixed end plate portion 151 in a manner of extending toward a rear housing 160 in an axial direction, or may be formed by increase a thickness of the fixed end plate portion 151. However, in the latter case, as a weight of the fixed scroll 150 is increased, and an unnecessary portion is also thickly formed, a length of the discharge port 155 may increase, thereby increasing a dead volume. Therefore, it is preferable to form the second shaft accommodating portion 157 by protruding part of the fixed end plate portion 151 as in the former case, for example, by protruding in an axial direction except for a portion where the discharge hole 155 is formed.

The second shaft accommodating portion 157 is formed in a cylindrical shape in which the rear surface is closed, and the second bearing 172 forming a bearing surface with the sub bearing portion 125c of the rotation shaft 125 is inserted into and coupled to an inner circumferential surface thereof. The second bearing 172 may be implemented as a bush bearing or may be implemented as a needle bearing.

In addition, an oil supply space 157a is formed on one side of the second shaft accommodating portion 157 at a predetermined distance from a rear end of the rotation shaft 125, and the oil supply space 157a may communicate with the motor chamber (S1) through the oil supply guide hole 158a provided in the fixed end plate portion 151. The oil supply guide hole 158a may be formed inside the protruding portion 158 provided on a rear surface of the fixed end plate 151. The protruding portion 158 may be extended in a radial direction from the outer circumferential surface to have a rectangular shape.

In addition, a plurality of fastening holes 159 for fastening bolts are formed at an edge of the scroll sidewall portion 152 at predetermined intervals along a circumferential direction. It will be described again later.

The rear housing 160 is coupled to a rear surface of the fixed scroll 150. The discharge chamber (S2) is formed on a front surface of the rear housing 160 along with a rear surface of the fixed scroll 150. An exhaust port 161 for communicating with the discharge chamber (S2) to discharge refrigerant discharged into the discharge chamber (S2) is formed in the rear housing 160, and an oil separation portion (not shown) may be provided in the exhaust port 161. A fastening hole 162 for fastening a bolt is formed at an edge of the rear housing 160.

Meanwhile, an inverter housing 210 may be coupled in a covering manner to one of both ends of the main housing 110, which is opposite to the rear housing 160, namely, coupled to the front end of the main housing 110.

Referring back to FIGS. 1 and 2, the inverter housing 210 constitutes a part of an inverter module102. The inverter housing 210 forms an inverter room S4 together with an inverter cover 220.

The inverter room S4 accommodates therein inverter components 230 such as a substrate and an inverter element, and the inverter housing 210 and the inverter cover 220 are coupled to each other by bolts. The inverter cover 220 may be assembled to the inverter housing 210 after the inverter housing 210 is first assembled to the main housing 110, or the inverter housing 210 may be assembled to the main housing 110 after being assembled to the inverter cover 220. The former and the latter may differ according to a method of assembling the inverter housing 210 to the main housing 110.

In the drawing, non-described reference numerals 108d and 152c denote a sealing member and a reference hole, respectively.

The foregoing motor operated compressor according to the present embodiment operates as follows.

In other words, when power is applied to the drive motor 120, the rotation shaft 125 transfers a rotational force to the orbiting scroll 140 while rotating together with the rotor 122, and the orbiting scroll 140 performs an orbiting movement by the oldham ring 180. Then, the compression chamber V is reduced in volume while continuously moving toward a center.

Then, refrigerant is introduced into the motor chamber (S1), which is a suction space, through the intake port 111, and the refrigerant introduced into the motor chamber (S1) is sucked into the compression chamber (V) through the drive motor.

Then, refrigerant is compressed by the orbiting scroll 140 and the fixed scroll 150 and discharged to the discharge chamber (S2) through the discharge port 155, and the refrigerant is separated from oil in the discharge chamber (S2), and the refrigerant is discharged into a refrigeration cycle through the exhaust port 161 while the oil is supplied to each bearing surface through the oil supply passage in a mist state, and part of the oil is introduced into the back pressure chamber (S3) to form a back pressure supporting the orbiting scroll 140 toward the fixed scroll 150.

Then, the orbiting scroll 140 is supported in a direction toward the fixed scroll 150 by a back pressure of the back pressure chamber (S3) to seal the compression chamber (V) between the orbiting scroll 140 and the fixed scroll 150. At this time, part of the oil in the back pressure chamber (S3) is introduced into the compression chamber (V) through the back pressure hole 141a provided in the orbiting end plate portion 141 to repeat a series of processes to lubricate the compression chamber.

On the other hand, as a suction flow path is formed between a rear surface of the frame and a front surface of the fixed scroll corresponding thereto according to the present embodiment, a sealing member such as a gasket is required between the rear surface of the frame and the front surface of the fixed scroll. In addition, a plate for supporting and lubricating the orbiting scroll is required between the rear surface of the frame and the front surface of the orbiting scroll.

According to embodiments in the related art, as the sealing member provided between the frame and the fixed scroll and the plate provided between the frame and the orbiting scroll are independently provided, the number of parts as well as the number of assembly processes increases. However, the present embodiment may reduce the number of parts and the number of assembly processes by forming the sealing member and the plate as a single body.

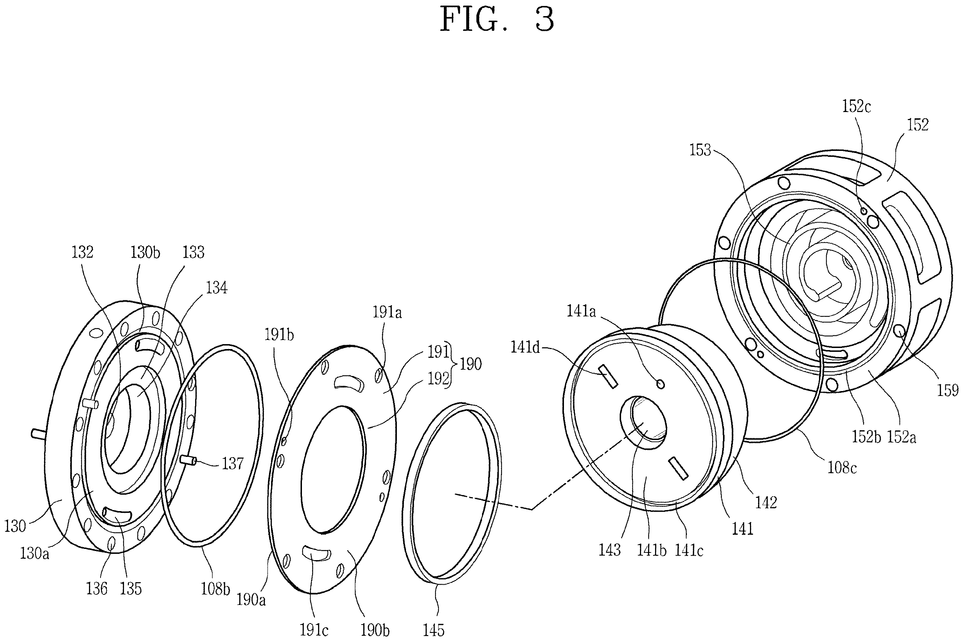

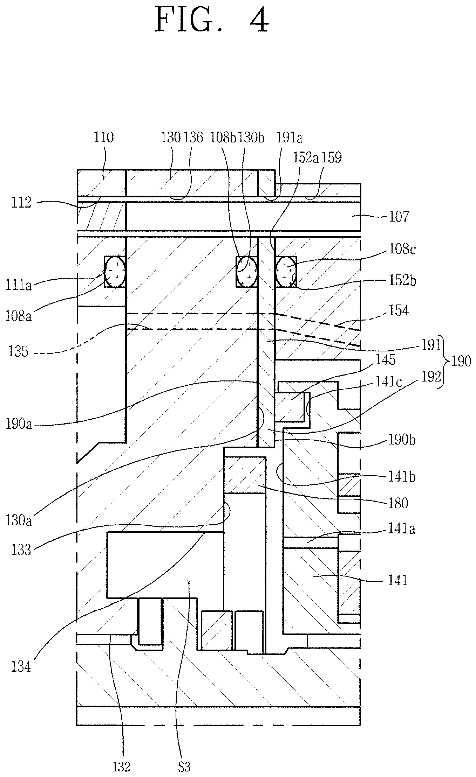

FIG. 3 is an exploded perspective view showing a compression unit according to the present embodiment, and FIG. 4 is an enlarged cross-sectional view showing a configuration in which a gasket plate provided between a frame, an orbiting scroll, and a fixed scroll is assembled in the compression unit according to the present embodiment.

Referring to FIG. 3, the oldham ring mounting groove 133 and the balance weight receiving groove 134 are continuously formed in a stepped manner at a rear central portion of the frame 130, and a support surface 130a for supporting the orbiting scroll 140 and the fixed scroll 150 is formed flat at a rear edge portion of the frame 130. Accordingly, the support surface 130a of the frame 130 facing the scroll sidewall portion 152 of the fixed scroll 150 is formed at the same height as a surface where the oldham ring mounting groove 133 starts.

The support surface 130a is a portion corresponding to an area from a surface where the oldham ring mounting groove 133 starts to an outer circumferential surface of the frame 130, and the entire support surface 130a is formed at the same height. Accordingly, an area from an inner circumferential surface of the gasket plate 190 to an outer circumferential surface thereof, which will be described later, may be formed flat.

In addition, one or two or more suction passages 135 communicating between the motor chamber (S1) and the suction chamber are formed in a penetrating manner on the support surface 130a. The suction passages 135 may be formed to have the same number and shape at positions corresponding to suction holes 191c of the gasket plate 190 which will be described later.

In addition, a bolt hole 136 for bolting the rear housing 160, the fixed scroll 150, and the main housing 110 is formed on the support surface 130a. A plurality of bolt holes 136 are formed at preset intervals along a circumferential direction from an outside of the suction passage 135. The bolt holes 136 may also be formed to have the same number and shape at positions corresponding to the through holes 191a provided in the gasket plate 190.

In addition, a reference pin 137 for aligning the assembly position of the fixed scroll 150 may be press-fit and coupled to the support surface 130a. At least two reference pins 137 may be coupled between the bolt holes 136 at preset intervals along a circumferential direction.

In addition, the support surface 130a may be formed with an annular frame side sealing groove 130b. A first sealing member 108a such as an O-ring may be inserted into the frame side sealing groove 130b. The first sealing member 108a seals between the gasket plate 190 and the support surface which will be described later. Therefore, the frame side sealing groove 108a may be located between the suction passage 35 and the bolt hole 136.

However, the first sealing member 182 may be excluded according to circumstances. For example, when the sealing portion 191 of the gasket plate 190, which will be described later, may tightly seal between the frame 130 and the gasket plate 190, the first sealing member 108a may be excluded.

On the other hand, in the fixed scroll 150, the scroll sidewall portion 152 is extended in an annular shape from a front edge of the fixed end plate portion 151 as described above. The front surface 152a of the scroll sidewall portion 152 is extended in an axial direction to be larger than a wrap length of the fixed wrap 153 so as to face the support surface 130a of the frame 130.

A sealing groove 152b in an annular shape may be formed on the front surface 152a of the scroll sidewall 152. The sealing member 108c such as an O-ring may be inserted into the sealing groove 152b. The sealing member 108c seals between the rear surface 190b of the gasket plate 190 and the front surface 152a of the scroll sidewall portion 152. Therefore, the sealing groove 152b of the scroll sidewall portion 152 may be located at an inner side of the bolt hole 159.

However, the sealing member 108c provided between the scroll sidewall portion 152 and the gasket plate 1190 may be excluded according to circumstances. For example, when the sealing portion 191 of the gasket plate 190 which will be described later can tightly seal between the fixed scroll 150 and the gasket plate 190, the sealing member 108c described above may be excluded.

In addition, an inner diameter of the scroll sidewall portion 152 is formed larger than an outer diameter of the orbiting end plate portion 141. Accordingly, the orbiting scroll 140 may move in an axial direction within a range in which the orbiting wrap 142 is brought into contact with the fixed end plate portion 151 in the scroll sidewall portion 152 of the fixed scroll 150 according to a pressure of the back pressure chamber (S3).

An outer diameter of the orbiting end plate portion 141 is formed larger than an inner diameter of the support surface 130a of the frame 130. Accordingly, the front surface 141b of the orbital end plate portion 141 faces the supporting surface 130a of the frame 130 in an axial direction. When the orbiting scroll 140 performs an orbiting movement, the front surface 141b of the orbiting end plate portion 141 may be axially supported with respect to the support surface 130a of the frame 130.

Here, the back pressure chamber (S3) is formed between the frame 130 and the orbiting scroll 140, the back pressure chamber sealing member (hereinafter, a back pressure sealing member) 145 for forming the back pressure chamber (S3) is provided between the frame 130 and the orbiting scroll 140. However, since the gasket plate 190 which will be described later is provided between the frame 130 and the orbiting scroll 140, the back pressure sealing member 145 is inserted into the back pressure chamber sealing groove 141c provided in the orbiting scroll 140, and provided between the orbiting scroll 140 and the gasket plate 190.

The back pressure sealing member 145 is formed in an annular ring shape made of a material having lubricity, for example, Teflon, unlike the other sealing members 108a, 108b, 108c, 108d. The back pressure sealing member 145 may be inserted into the support surface 130a of the frame 130.

However, when the frame 130 and the orbiting scroll 140 are formed of an aluminum material as in the present embodiment, the gasket plate 190 made of a steel sheet is provided between the frame 130 and the orbiting scroll 140. When the gasket plate 190 made of steel sheet is provided between the frame 130 and the orbiting scroll 140 made of aluminum, wear between the same materials may be reduced.

In this case, the back pressure sealing member 145 is provided on the front surface 141b of the orbiting end plate portion 141. Accordingly, the front surface 190a of the gasket plate 190 is sealed in close contact with the support surface 130a of the frame 130 while the rear surface 190b of the gasket plate 190 is sealed in close contact with the back pressure sealing member 145 to seal the back pressure chamber (S3). The back pressure sealing member 145 may be supported by oil at an intermediate pressure flowing from the back pressure chamber (S3) or elastically supported by an elastic member (not shown) such as an O-ring provided in the back pressure chamber sealing groove 141c.

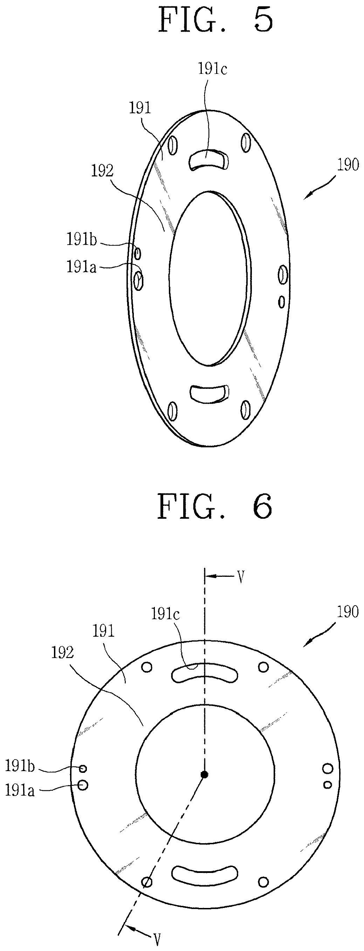

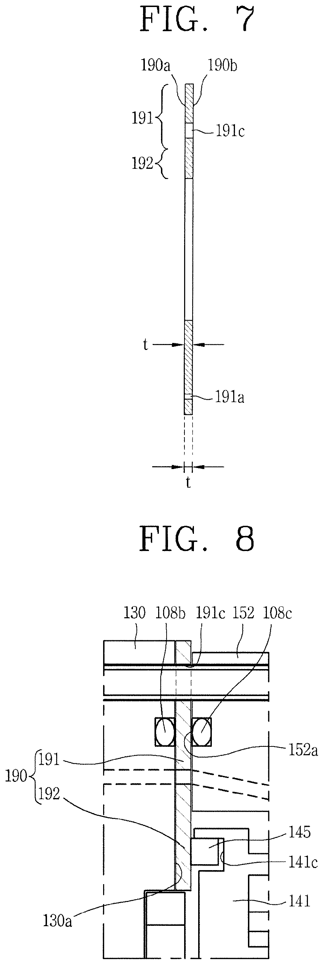

FIG. 5 is a perspective view showing an embodiment of the gasket plate according to the present embodiment, and FIG. 6 is a plan view showing the gasket plate according to FIG. 5, and FIG. 7 is a cross-sectional view taken along line "V-V" in the gasket plate according to FIG. 6, and FIG. 8 is a cross-sectional view showing a configuration in which the gasket plate according to FIG. 5 is coupled between the frame and the fixed scroll.

Referring to FIGS. 5 through 8, the gasket plate 190 according to the present embodiment is formed of a steel sheet material having a rigidity greater than that of the frame 130 or the orbiting scroll 140, as described above. An inner diameter of the gasket plate 190 may be greater than or equal to an outer diameter of the oldham ring mounting groove 133. Accordingly, the gasket plate 190 may be disposed so as not to overlap with the oldham ring mounting groove 133.

In addition, the gasket plate 190 is inserted and fixed between the support surface 130a of the frame 130 and the scroll sidewall portion 152 of the fixed scroll 150, and located between the support surface 130a of the frame 130 and the front surfaces 141b of the orbiting scroll 140 to slidably provided the orbiting scroll 140. Accordingly, the gasket plate 190 is formed in an annular shape, and an outer portion forming the edge seal portion may be formed with a sealing portion 191 to seal between the support surface 130a of the frame 130 and the front surface 152a of the scroll sidewall portion 152, and an inner portion forming a relatively central portion compared to the outer portion may be formed with a sliding portion 192 to slide the orbiting scroll (more precisely, the back pressure sealing member).

In other words, the gasket plate 190 may be formed with the sealing portion 191 provided between the frame 130 and the fixed scroll 150 and the sliding portion 192 extended from the sealing portion and provided between the frame 130 and the orbiting scroll 140.

The sealing portion 191 and the sliding portion 192 may have the same height in an axial direction, and the sealing portion 191 and the sliding portion 192 may be formed to have the same thickness (t).

A plurality of plate side through holes 191a are formed in the sealing portion 191 to allow a fastening member 107 to pass through the main housing 110, the frame 130, the fixed scroll 150, and the rear housing 160, and a plate side reference hole 191b is formed between the plate side through holes 191a to allow the reference pin 137 passes therethrough, and the suction hole 191c communicating with the suction passage 135 is formed at an inner side of the plate side through hole 191a as described above.

The sliding portion 192 is formed flat to form a slippery surface. A front surface of the sliding portion 192 is supported in close contact with the support surface 130a of the frame 130, and a rear surface of the sliding portion 192 is supported to slide on the front surface 141b of the orbiting scroll 140.

The sliding portion 192 is located outside an orbiting movement range of the oldham ring 180. Accordingly, an inner diameter of the sliding portion 192 is provided on the front surface 141b of the orbiting scroll 140 and formed to be larger than or equal to a diameter of an imaginary line connecting an outer surface of the key groove 141d into which a key of the oldham ring 180 is inserted.

As described above, as the sealing portion 191 of the gasket plate 190 is inserted between the support surface 130a of the frame 130 and the front surface 152a of the scroll sidewall portion 152 of the fixed scroll 150, a gap between the frame 130 and the fixed scroll 150 may be tightly sealed.

Furthermore, as the sliding part 192 is extended from an inner circumference of the sealing portion 191 and provided between the orbiting scroll 140 and the frame 130, the orbiting scroll 140 and the frame 130 may be prevented from being in direct contact with each other even if the orbiting scroll 140 and the frame 130 are formed of the same material, aluminum. Through this, it may be possible to prevent the orbiting scroll 140 and the frame 130 from being worn.

In addition, as the back pressure sealing member 145 provided in the orbiting scroll 140 is brought into contact with the sliding portion 192 of the gasket plate 190 having relatively high roughness to perform a sliding movement, it may be possible to prevent the back pressure sealing member 145 from being worn as well as improve a sealing effect on a surface in contact with the back pressure sealing member 145. Accordingly, a pressure in the back pressure chamber (S3) may be maintained uniformly to stably support the orbiting scroll 140.

Furthermore, as the sealing portion 191 and the sliding portion 192 are integrally formed, it may be reduce the number of assembly processes while at the same time reducing the number of parts compared to a case where a member that seals between the frame 130 and the fixed scroll 150 and a member that slidably supports between the frame 130 and the orbiting scroll 140 are independently provided.

Meanwhile, another embodiment of the gasket plate according to the present disclosure will be described as follows.

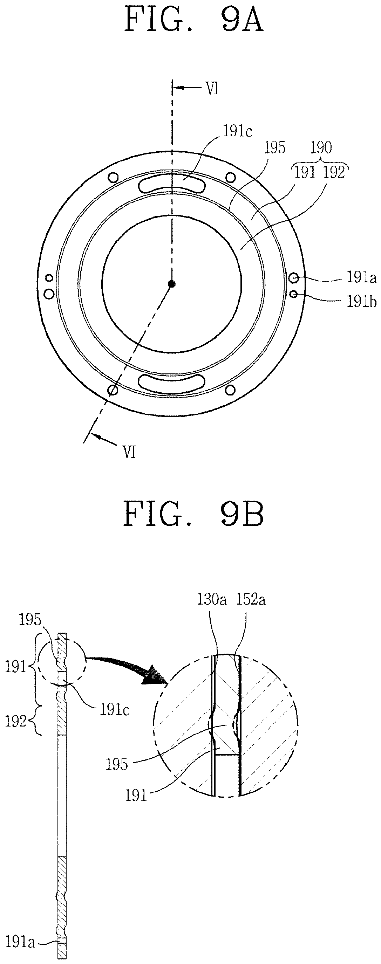

In other words, in the foregoing embodiment, the sealing portion is formed in a flat shape, but in the present embodiment, a sealing protrusion or a coating surface for doubling the sealing force may be further formed in the sealing portion. FIG. 9A is a plan view illustrating an example in which a sealing protrusion is provided in a gasket plate according to the present embodiment, and FIG. 9B is a cross-sectional view taken along line "VI-VI" of FIG. 9A.

Referring to FIGS. 9A and 9B, at least one sealing protrusion 195 may be formed in the sealing portion 191 to be pressed in close contact with the frame 130 and the fixed scroll 150. The sealing protrusion 195 may be formed to protrude in a direction toward the support surface 130a of the frame 130 or the front surface 152a of the scroll sidewall portion 152 of the fixed scroll 150. In addition, although the sealing protrusion 195 may be formed in a plurality of embossing shapes, it may be preferably formed in an annular shape in a planar projection in consideration of the sealing force.

The sealing protrusion 195 may be formed between the through hole 191a and the suction hole 191c and at an inner side of the suction hole 191c, respectively. However, in some cases, only one sealing protrusion 195 may be formed between the through hole 191a and the suction hole 191c or at an inner side of the suction hole 191c, or may be further formed at an outer side of the through hole 191a.

In addition, the sealing protrusion 195 may be formed between the through holes 191a or between the suction holes 191c. When the sealing protrusion 195 is formed between the through holes 191a or between the suction holes 191c, the sealing protrusion 195 may be connected to surround the through holes 191a or the suction holes 191c. In other words, the sealing protrusion 195 is sufficient anywhere in a region where both sides of the frame 130 and the fixed scroll 150 are brought into contact with each other between the frame 130 and the fixed scroll 150.

As described above, when the sealing protrusion 195 is formed in the sealing portion 191, the sealing protrusion 195 is pressed in close contact therewith in the process of fastening the frame 130 and the fixed scroll 150 by a fastening bolt 107, thereby more tightly sealing the frame 130 and the fixed scroll 150. Then, as described above, the sealing members 108b, 108c between the frame 130 and the gasket plate 190 or between the fixed scroll 150 and the gasket plate 190 may be excluded. However, in consideration of the sealing force, it may be preferable that the sealing members 108b, 108c are further provided at the positions.

Meanwhile, in the above-described embodiment, the gasket plate is formed of only a steel sheet so that the surfaces of the sealing portion and the sliding portion form a metal surface, but according to circumstances, a coating surface may be formed of a material having elasticity on a surface of the sealing portion.

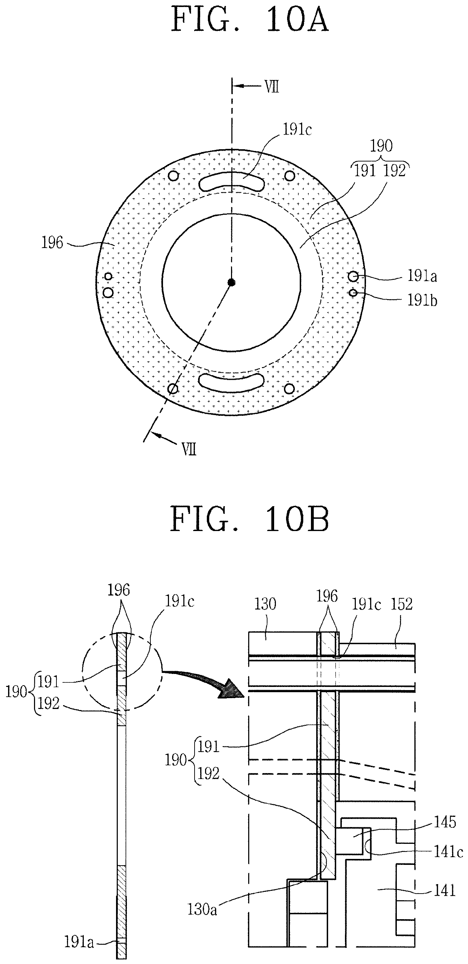

FIG. 10A is a plan view showing an example in which a coating surface is provided in the gasket plate according to the present embodiment, and FIG. 10B is a cross-sectional view taken along line "VII-VII" in FIG. 10A.

Referring to FIGS. 10A and 10B, a coating surface 196 may be formed on the sealing portion 191 of the gasket plate 190. The coating surface 196 may be made of a material having a relatively high elasticity than the steel sheet, such as resin.

In this case, a surface of the sealing portion 191 may be formed flat, or the sealing protrusion may be further formed as in the previous embodiment.

As described above, in case where the coating surface 196 is formed on both surfaces or at least one surface of the sealing portion 191, the coating surface 196 provided on the surface of the sealing portion 191 is pressed to be compressed to the frame 130 and the fixed scroll 150, respectively, when fastening the frame 130 and the fixed scroll 150 Then, a gap between the frame 130 and the fixed scroll 150 may be tightly sealed by interposing the gasket plate therebetween.

On the other hand, in the motor operated compressor according to the present embodiment, as the frame and the fixed scroll are provided at an outside of the main housing, the rear housing, the fixed scroll and the frame, and the main housing may be collectively fastened with fastening bolts.

Referring back to FIGS. 2 and 4, fastening holes 162, 159, 136 are formed in the foregoing rear housing 160, the fixed scroll 150, and the frame 130, respectively, and fastening grooves 112 are formed in the main housing 110 to correspond to the fastening holes.

In addition, the plurality of fastening bolts 107 sequentially pass through the respective fastening holes 162, 159, 136 of the rear housing 160, the fixed scroll 150, and the frame 130 and fastened to the fastening groove 112 of the main housing 110, thereby collectively fastening the aforementioned members 110, 130, 150, 160.

As described above, as the rear housing 160, the fixed scroll 150, the frame 130 and the main housing 110 forming an appearance of the motor operated compressor are collectively fastened using a long fastening bolt 107, the fastening structure of the foregoing members may be simplified, thereby reducing the number of assembly processes to decrease manufacturing cost.

In addition, when the rear housing 160, the fixed scroll 150, the frame 130, and the main housing 110 form the appearance of the motor operated compressor as described above, sealing members 108d, 108c, 108b, 108a, such as O-rings or gaskets may be further provided between each member, that is, between the rear housing 160 and the fixed scroll 150, between the fixed scroll 150 and the frame 130 (more precisely between the fixed scroll and the gasket plate and between the gasket plate and the frame), between the frame 130 and the main housing 110. Through this, an inner space of the motor operated compressor may be tightly sealed.

Meanwhile, another embodiment of the motor operated compressor according to the present disclosure will be described as follows.

In other words, in the above-described embodiment, the frame and the fixed scroll are coupled at an outside of the main housing and the rear housing, but in the present embodiment, the frame and the fixed scroll are inserted into and coupled to an inside of the main housing and the rear housing.

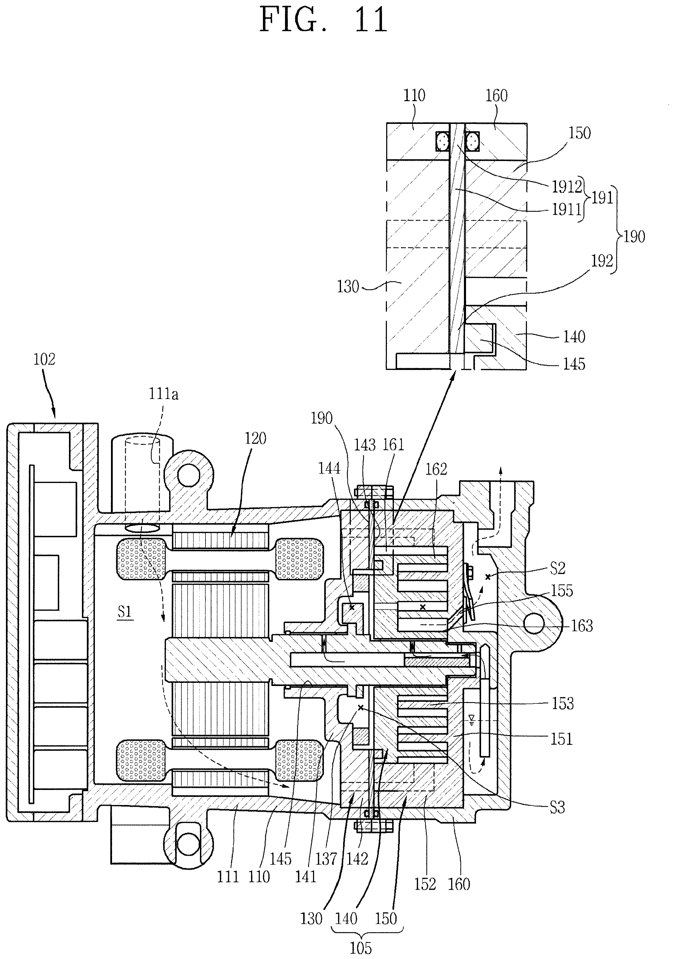

FIG. 11 is a sectional view illustrating another embodiment of a motor operated compressor according to the present disclosure.

Referring to FIG. 11, the frame 130 and the fixed scroll 150 are inserted into and coupled to the main housing 110 and an inside of the rear housing 160, respectively. Even in this case, the gasket plate 190 may be provided between the frame 130 and the orbiting scroll 140.

The gasket plate 190 according to the present embodiment is formed in almost the same manner as the above-described embodiment, and the effect thereof is also substantially the same. In other words, the gasket plate 190 according to the present embodiment, the sealing portion 191 and the sliding portion 192 may be formed in a single body. The sealing portion 191 is in close contact with and fixed to the frame 130 and the fixed scroll 150 between the frame 130 and the fixed scroll 150, and the sliding portion 192 is slidably brought into contact with the back pressure sealing member 145 provided in the orbiting scroll 140 between the frame 130 and the fixed scroll 150.

However, in the present embodiment, the frame 130 is inserted into the main housing 110 and the fixed scroll 150 is inserted into the rear housing 160, respectively, so that the main housing 110 and the rear housing 160 are in close contact with and coupled to each other. Accordingly, the sealing portion 191 of the gasket plate 190 may be further extended between the main housing 110 and the rear housing 160 in addition to between the frame 130 and the fixed scroll 150.

For example, for the sealing portion 191 of the gasket plate 190 according to the present embodiment, a first sealing portion 1911 and a second sealing portion 1912 may be formed between the frame 130 and the fixed scroll 150, and between the main housing 110 and the rear housing, respectively, and the first sealing portion 1911 and the second sealing portion 1912 may be formed in a single body to each other.

Even in this case, sealing protrusions (not shown) may be formed on the first sealing portion 1911 and the second sealing portion 1912, respectively, and coating surfaces (not shown) may be formed thereon. Furthermore, in some cases, a sealing protrusion or a coating surface may be formed on only one of the first sealing portion 1911 and the second sealing portion 1912.

The motor operated compressor according to the present embodiment as described above has the same basic configuration as the motor operated compressor and the effects thereof is also the same. Accordingly, the detailed description thereof will be omitted.

In addition, although a motor-driven scroll compressor in which the casing is installed in a transverse direction has been described in the above-mentioned embodiments, the present disclosure may also be applicable to a general scroll in which the casing is installed in a longitudinal direction.

In addition, in the foregoing embodiments, a low-pressure scroll compressor in which an inner space of the casing constitutes a suction space has been described, but the present disclosure may be similarly applicable to a high-pressure scroll compressor in which an inner space of the casing constitutes a discharge space.

## Claims

1. A motor operated compressor, comprising:
a main housing (110) having a motor chamber;
a frame (130) provided on one side of the motor chamber and coupled to the main housing (110);
a fixed scroll (150) coupled to one side surface of the frame;
an orbiting scroll (140) provided to perform an orbiting movement between the frame (130) and the fixed scroll (150), and form a compression chamber along with the fixed scroll; and
a plate (190) provided between the frame (130) and the fixed scroll (150) and between the frame (130) and the orbiting scroll (140),
wherein the plate (190) comprises:
a sealing portion (191) at least part of which is positioned between the frame (130) and the fixed scroll (150); and
a sliding portion (192) extended from the sealing portion (191) as a single body and positioned between the frame (130) and the orbiting scroll (140).

2. The motor operated compressor of claim 1, wherein a sealing member (145) that forms a back pressure chamber between the orbiting scroll (140) and the frame (130) is further provided on one side surface of the orbiting scroll (140) facing the frame (130), and
the sealing portion (191) of the plate (190) is provided on an outer side than a portion in contact with the sealing member (145), and the sliding portion (192) of the plate (190) is provided at a portion in contact with the sealing member (145).

3. The motor operated compressor of claim 1 or 2, wherein the frame (130) is coupled to the main housing (110) at an outside of the main housing (110), and the fixed scroll (150) is coupled to the frame (130) at an outside of the main housing (110), and
a rear housing (160) forming a discharge chamber is coupled to the fixed scroll (150) to accommodate refrigerant discharged from the compression chamber, and the fixed scroll (150) is coupled to an outside of the rear housing (160).

4. The motor operated compressor of claim 3, wherein a through hole (191a) is formed in the sealing portion to allow a bolt for fastening the main housing (110), the frame (130), the fixed scroll (150), and the rear housing (160) to pass therethrough.

5. The motor operated compressor of claim 1 or 2, wherein the frame (130) is inserted into and coupled to an inner circumferential surface of the main housing (110), and a rear housing (160) into which the fixed scroll (150) is inserted is coupled to one end of the main housing (110), and
the sealing portion (191) is provided between the main housing (110) and the rear housing (160).

6. The motor operated compressor of claim 5, wherein a through hole (191a) is formed in the sealing portion (191) to allow a bolt for fastening the main housing (110) and the rear housing (160) to pass therethrough.

7. The motor operated compressor of any one of claims 1 to 6, wherein a reference hole (191b) is formed in the sealing portion (191) to insert a reference pin coupled to the frame (130) or the fixed scroll (150).

8. The motor operated compressor of any one of claims 1 to 7, wherein the frame (130) is provided with a first portion facing one side surface of the fixed scroll (150) and a second portion provided on an inner side of the first portion to face one side surface of the orbiting scroll (140), and
the first portion and the second portion are formed at the same height in an axial direction.

9. The motor operated compressor of claim 8, wherein the second portion is provided with a rotation prevention member (180) for preventing the rotation of the orbiting scroll, and
the sealing portion (191) is provided on an outer side than the rotation prevention member in a radial direction.

10. The motor operated compressor of any one of claims 1 to 9, wherein the plate (190) is made of a material having a higher rigidity than the frame (130) and the orbiting scroll (140).

11. The motor operated compressor of claim 10, wherein the sealing portion (191) and the sliding portion (192) are formed to have the same height in an axial direction.

12. The motor operated compressor of claim 11, wherein the sealing portion (191) and the sliding portion (192) are formed to have the same thickness.

13. The motor operated compressor of claim 10 or 11, wherein at least one sealing protrusion (195) protruded in a direction toward the frame (130) or the fixed scroll (150) to be pressed in close contact with the frame (130) and the fixed scroll (150) is formed in the sealing portion (191), and
the sealing protrusion (195) is formed in an annular shape.

14. The motor operated compressor of claim 10, wherein a coating surface made of a material having elasticity is further formed on a surface of the sealing portion (191).

15. The motor operated compressor of any one of claims 14, wherein a space portion (S3) axially recessed to form a back pressure chamber along with the orbiting scroll is formed at a central portion of the frame (130), and a support surface portion (130a) for supporting the plate (190) in an axial direction is formed on an outer side of the space portion, and
wherein the support surface portion (130a) is formed to have the same height in an axial direction.
